# EUROPEAN PATENT APPLICATION

(11) **EP 3 783 207 A1**
(43) Date of publication of application: **24.02.2021**
(21) Application number: 19788124.6
(22) Date of filing: 12.04.2019
(51) Int. Cl.: F02B 37/12, F02B 37/18, F02B 37/22, F02D 13/04, F02D 9/06

(54) **COMPOUND ENGINE BRAKING METHOD AND TURBOCHARGING CONTROL APPARATUS**

(30) Priority: 19.04.2018 CN 201810353337; 19.04.2018 CN 201820559905 U; 18.07.2018 CN 201810791269; 16.08.2018 CN 201810935370
(71) Applicant: Shanghai Ennova Valvetrain Corp., Fengxian District Shanghai 201415 (CN)
(72) Inventor: YANG, Zhou, Shanghai 201415 (CN); XI, Yong, Shanghai 201415 (CN)
(74) Representative: de Rooij, Mathieu Julien
(86) International application number: PCT/CN2019/082397
(87) International publication number: WO 2019/201162

(57) **Abstract**

The invention provides a combined engine braking method and a turbocharging control device, including an air injection mechanism, through which air is injected into an engine (including into an exhaust flow passage downstream of an exhaust manifold of the engine, onto a guide gate provided in the exhaust flow passage, turbine blades of a turbocharger or an impeller of a compressor of the turbocharger), the operation of the turbocharger is controlled, and the airflow and the pressure of the engine are regulated. By the combined use of the turbocharging control device of the present invention and an engine braking device, a high-performance combined engine braking method is realized. The system of the present invention is compact in structure, of a small volume and can be arranged on the upstream of the turbine or on the turbocharger to make full use of the turbocharger, thereby reducing turbo lag, increasing exhaust gas circulation, reducing engine exhaust emission and increasing engine braking power.

## Description

### TECHNICAL FIELD

The invention relates to the field of machinery, in particular to the field of engines, and further particularly to a combined engine braking method and a turbocharging control device.

### BACKGROUND ART

In the prior art, the use of vehicle engines has a long history and the control of the exhaust gas flow of engines is well known. For example, turbochargers commonly used in diesel engines include variable turbochargers that drive turbines of the turbochargers with engine exhaust gases, and the turbines drive compressors coaxially connected therewith to force air into intake manifolds and cylinders. Turbochargers may control exhaust gas flow and pressure through a wastegate or variable vanes. There are also exhaust backpressure devices, such as an exhaust brake that can partially close or completely seal the whole exhaust flow passage (exhaust pipe), reduce or cut off the exhaust flow and increase the exhaust pressure of the engine.

The control of engine exhaust gas flow or pressure has wide applications. In order to reduce emissions during engine ignition operation, exhaust gas recirculation (EGR) is required, that is, a portion of the exhaust gases from the engine's combustion emissions is returned to the engine's cylinder. The implementation of exhaust gas recirculation requires that the exhaust pressure be higher than the intake air pressure or cylinder pressure, and the engine exhaust gas flow or pressure be controlled. During the engine braking operation, increasing exhaust pressure will help to increase the braking power and reduce the braking load.

The prior art of controlling engine exhaust gas flow or pressure has disadvantages or limitations. For example, the wastegate of a turbocharger typically operates only when the engine is working at high speeds. Variable turbochargers are expensive and poor in reliability. Other controllable exhaust backpressure devices, such as Volvo's engine pressure regulator (EPR), are complex, costly, and bulky. A general exhaust brake can only be installed downstream of the turbocharger, when the exhaust brake is closed, the function of the turbocharger is completely off, and the engine loses intake supercharging, as a result, the exhaust temperature is too high.

Engine braking is also widely used. The main difference between the prior engine braking operation and the conventional ignition operation lies in no fuel injection or combustion during braking, and that the power-generating engine is temporarily converted into an energy-absorbing air compressor. During engine braking, in addition to the conventional operation of opening the intake and exhaust valves in the intake and exhaust strokes, the engine brake reopens the exhaust valve(s) during the compression stroke of the engine piston, allowing the compressed gas, which is air during braking, to be released; the energy absorbed by the compressed gas during the compression stroke of the engine cannot return to the piston of the engine during the subsequent expansion (working) stroke, instead, the energy is released through the exhaust and heat dissipation system of the engine. The end result is an effective engine braking, which slows down the vehicle.

The engine braking power and load increase with the rotating speed, the engine mostly works at medium and low speeds in actual use, so it's essential to improve the braking power of the engine at the medium and low speeds on the premise of not increasing the braking load (not overloading). Traditionally, a combination braking is to combine exhaust braking (out-of-cylinder braking) with compression-release braking, such as using an exhaust brake to increase the exhaust pressure of the engine. The combination braking can indeed increase the braking power at medium and low speeds, reduce the braking load and eliminate the braking noise. At present, however, almost all backpressure control devices, such as the exhaust brake, cannot be installed upstream of the turbine of the turbocharger due to their bulky structure (due to the side effects of turbo lag). The backpressure control device provided on the exhaust tailpipe downstream of the turbine greatly reduces or even completely cut off the exhaust gas flow, so that the turbocharger's rotating speed is greatly reduced, the air intake pressure and the airflow, as well as the corresponding cooling effect, are reduced or even eliminated, the exhaust gas temperature is increased, as a result, some components of the engine, such as the fuel injection nozzle, could be overheated.

As early as 1983, the U.S. Patent No. 4,395,884 discloses the use of a diverter valve upstream of the turbine of a turbocharger to merge exhaust gas flows entering two turbine inlet passages to one turbine inlet passage, to change the direction and velocity of the exhaust gas flow, to increase the turbine rotating speed, to increase intake and exhaust pressures, and to increase engine braking power. However, due to the limited space upstream of the turbine, and the complicated mechanism, large volume and difficulties in the control of the diverter valve, this design cannot be put to actual use.

### SUMMARY OF THE INVENTION

In view of the above-mentioned disadvantages of the prior art, it is an object of the present invention to provide a combined engine braking method and a turbocharging control device for solving the technical problems of complicated mechanism, high cost, large volume and difficult control of a backpressure control device of an engine, idling of a turbocharger caused by the backpressure control device, too high exhaust temperature of the engine at a high rotation speed, and easy overheating of a fuel nozzle tip, etc.

To achieve the above and other related objects, the present invention provides a combined engine braking method for an engine with a turbocharger, characterized in that the engine is provided with an engine brake which opens an exhaust valve on an engine cylinder and releases gas compressed in the engine cylinder during a compression stroke of the engine into an exhaust manifold; an air injection mechanism is additionally provided on the engine and used to alter an exhaust gas flow of the engine, to control the operation of the turbocharger, and to regulate an intake pressure and an exhaust pressure of the engine; the combined engine braking method comprises the steps of:
a) determining whether engine braking is necessary when the engine runs at a certain speed;
b) determining whether conditions required for engine braking are satisfied if engine braking is necessary;
c) determining whether the air injection mechanism needs to be started if the conditions required for engine braking are satisfied;
d) directly starting the engine brake if the air injection mechanism does not need to be started; and
e) determining whether compressed air is available if the air injection mechanism needs to be started; performing combined engine braking if the compressed air is available: starting the engine brake and the air injection mechanism.

Preferably, an exhaust flow passage is provided between the exhaust manifold of the engine and turbine blades of a turbine of the turbocharger, and the air injection mechanism is started according to step e) to inject air into the exhaust flow passage.

Preferably, the air is injected in a flat shape by the air injection mechanism to form an air gate that covers part or all of the exhaust flow passage.

Preferably, the turbocharger comprises two exhaust inlets, the exhaust manifold comprising two outlets, each of the exhaust inlets of the turbocharger communicates with one of the outlets of the exhaust manifolds to form two separate exhaust flow passages, the air injection mechanism is started according to step e) to inject air into only one of the exhaust flow passages.

Preferably, an air inlet is provided in a turbine housing of the turbocharger, and the air injection mechanism is started according to step e) to inject air through the air inlet to turbine blades in the turbine.

Preferably, an air injection hole is provided in a compressor housing of the turbocharger, the air injection mechanism is started according to step e) to inject air to a compression impeller in the compressor through the air injection hole.

Preferably, the exhaust flow passage is provided between the exhaust manifold of the engine and the turbine blades of the turbocharger, a guide gate is arranged in the exhaust flow passage, the air injection mechanism is started according to step e) to inject the compressed air to the guide gate and drive the guide gate to move in the exhaust flow passage.

Preferably, the guide gate is positioned in an inlet passage of the turbine of the turbocharger, a hinge of the guide gate is provided at a joint of the outlet of the exhaust manifold with an inlet of the turbine of the turbocharger, the guide gate is rotatable about the hinge in the inlet passage of the turbine, an inner side of the guide gate faces an inner wall of the exhaust flow passage when the guide gate is in an initial position without rotation, the compressed air is injected on an inner side surface of the guide gate.

Preferably, a position where the air injection mechanism injects the compressed air to the inner side surface of the guide gate in the exhaust flow passage is at the joint of the outlet of the exhaust manifold with the inlet of the turbine of the turbocharger.

Preferably, the turbine of the turbocharger has two inlet passages, and one guide gate is provided in each of the inlet passages of the turbine.

Preferably, the two guide gates in the two inlet passages of the turbine are separately and independently rotatable or connected for simultaneous rotation.

Preferably, the air injection mechanism comprises a power source and a control valve, the power source comprises an air compressor or an air reservoir, the air compressor or the air reservoir generates the compressed air, and the control valve controls the injection time and the flow rate of the compressed air.

The invention also provides a turbocharging control device provided on an engine with a turbocharger, characterized in that the turbocharging control device comprises an air injection mechanism, the air injection mechanism comprises a power source, a control valve, an air outlet pipe or a nozzle, wherein the power source comprises an air compressor or an air reservoir, the control valve controls the injection time and flow rate of air, and the air injection mechanism injects air into an exhaust flow passage of an engine or turbine blades or a compressor impeller of the turbocharger through the air outlet pipe or the nozzle to control the operation of the turbocharger.

Preferably, the nozzle comprises an injection head having a flat shape, the injection head having the flat shape comprises one or more circular holes or slots disposed on one or more levels.

Preferably, the number and size of the circular holes or slots are determined by flow rate, velocity and distance of an injected fluid.

Preferably, the turbocharging control device further comprises a guide gate rotatably provided in the exhaust flow passage, when the guide gate is in an initial position without rotation, an inner side surface of the guide gate faces an inner wall of the exhaust flow passage, and the air injection mechanism injects air from the outside of the exhaust flow passage to the inner side surface of the guide gate in the exhaust flow passage to drive the guide gate to rotate and alter the exhaust gas flow in the exhaust flow passage.

Preferably, the inner side surface of the guide gate may be of different shapes, including flat, folded, concave, combined shapes or other curved shapes.

Preferably, the exhaust flow passage comprises an inlet passage of a turbine of the turbocharger, the guide gate is positioned in the inlet passage of the turbine, a hinge of the guide gate is provided at a joint of an outlet of an exhaust manifold with an inlet of the turbine of the turbocharger, the guide gate rotates about the hinge in the inlet passage of the turbine.

Preferably, the air injection mechanism comprises an air supply plate provided between the outlet of the exhaust manifold and the inlet passage of the turbine of the turbocharger, the air supply plate has a hinge slot formed therein, the hinge of the guide gate is disposed within the hinge slot.

Preferably, the air outlet pipe or nozzle of the air injection mechanism is positioned at the joint of the outlet of the exhaust manifold and the inlet of the turbine of the turbocharger.

Preferably, the turbine of the turbocharger has two inlet passages, and one guide gate is provided in each of the inlet passages of the turbine.

Preferably, the two guide gates in the two inlet passages of the turbine are separately and independently rotatable or connected for simultaneous rotation.

### BRIEF DESCRIPTION OF THE DRAWINGS

FIG. 1 is a schematic view showing an overall structure of a turbocharging control device and an engine system (single cylinder) of the present invention.
FIG. 2 is a schematic diagram of a control process of a combined engine braking method of the present invention.
FIG. 3 is a schematic view of an engine exhaust system of the combined engine braking method of the present invention.
FIG. 4 is another schematic view of the engine exhaust system of the combined engine braking method of the present invention.
FIG. 5 is a schematic view of a conventional four-stroke engine (single cylinder) with an exhaust brake system.
FIG. 6 is a schematic view showing an overall structure of the turbocharging control device and the engine system (six cylinders) of the present invention
FIG. 7 is a schematic view showing a first injection mode of an air injection mechanism of the turbocharging control device of the present invention
FIG. 8 is a schematic view showing a second injection mode of the air injection mechanism of the turbocharging control device of the present invention
FIG. 9 is a schematic view showing a third injection mode of the air injection mechanism of the turbocharging control device of the present invention
FIG. 10 is a schematic view showing a fourth injection mode of the air injection mechanism of the turbocharging control device of the present invention
FIG. 11 is a schematic view showing a fifth injection mode of the air injection mechanism of the turbocharging control device of the present invention
FIG. 12 is a partial sectional view of the turbocharging control device of the present invention, illustrating a state in which the guide gate is in an initial position (not driven) without rotation
FIG. 13 is a partial sectional view of the turbocharging control device of the present invention, illustrating a state after the guide gate is rotated (driven)
FIG. 14 is a schematic view of positions of an inlet passage of a turbine and guide gate of the turbocharging control device of the present invention

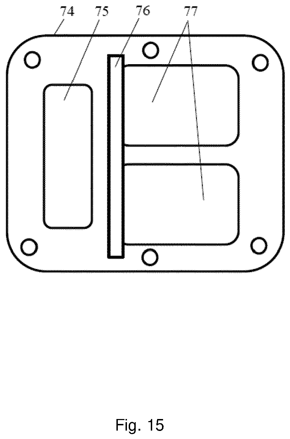

FIG. 15 is a schematic view of an air supply plate of the turbocharging control device of the present invention.

### LIST OF REFERENCE NUMERALS

- 12: intake manifold
- 13: intake flow distributor node
- 14: main intake pipe
- 210: turbocharger
- 222: shaft
- 218, 228: compressor, turbine
- 240: exhaust tailpipe
- 22: exhaust manifold
- 23: juncture of the exhaust manifold
- 24: exhaust flow passage
- 25: joint (joint end face)
- 26: inner wall of the exhaust flow passage
- 27: flow area of the exhaust flow passage
- 28: inlet passage of the turbine
- 29: turbine blade
- 30: engine
- 33: piston of the engine
- 35: cylinder of the engine
- 40: air injection mechanism
- 41: air compressor
- 43: air guide pipe
- 45: control valve
- 47: air outlet pipe
- 48: nozzle
- 49: compressed air
- 51: nut
- 53: air supply joint
- 60: guide gate
- 61, 63: inner and outer side surfaces of the guide gate
- 62: hinge of guide gate
- 71: first gasket
- 72: air supply hole/slot in the first gasket
- 74: air supply plate
- 75: air supply hole/slot in the air supply plate
- 76: hinge slot in the air supply plate
- 77: exhaust hole/slot in the air supply plate
- 78: second gasket
- 79: air supply hole/slot in the second gasket
- 100: engine brake
- 120: intercooler
- 140, 400: air
- 200: intake valve
- 300: exhaust valve
- 500: fuel injection nozzle of the engine

### DETAILED DESCRIPTION OF THE INVENTION

### EXAMPLE 1 (CN 201810791269.4)

The following describes the embodiments of the present invention with reference to specific examples, and those skilled in the art can easily understand other advantages and effects of the present invention from the disclosure in this description. The present invention can also be implemented or applied in the form of different specific embodiments. The details in this description may also have support from different viewpoints and applications, and various modifications or changes can be made without departing from the spirit of the present invention.

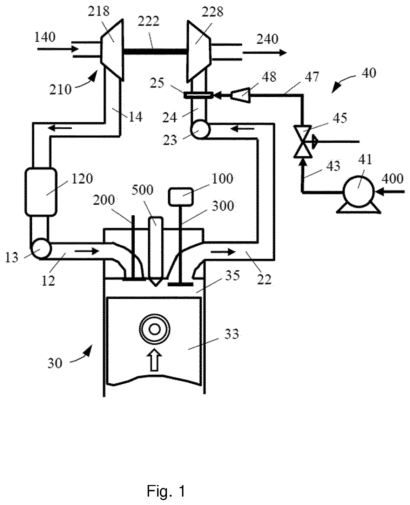

Reference is made to FIGS. 1 to 4. It should be noted that the drawings provided in this example illustrate, by way of example only, the basic concepts of the invention, that the drawings illustrate only the components that are pertinent to the invention and are not necessarily drawn to scale or to specify the shape and number of components in an actual implementation, that the form, number and proportions of the components in an actual implementation may vary widely, and that the layout of the components may be more complex.

FIG. 1 is a schematic view showing an overall structure of a turbocharging control device and an engine system (single cylinder) of the present invention. A typical engine has a plurality of cylinders, such as a straight-six-cylinder diesel engine on a commercial vehicle. However, for simplicity, FIG. 1 shows only one cylinder 35 in the engine 30. A piston 33 makes vertical reciprocating periodic movement in the cylinder 35. Each cycle of operation of the four-stroke engine 30 includes an intake stroke, a compression stroke, an expansion (or a working) stroke, and an exhaust stroke. During the intake stroke, the piston 33 moves within the cylinder 35 from a top dead center to an intake bottom dead center (i.e., the piston 33 moves downward in FIG. 1), and an intake valve 200 of the engine opens to introduce air into the cylinder 35 of the engine. Next, the compression stroke follows up, the piston 33 moves from the intake bottom dead center to a compression top dead center (i.e., the piston 33 moves upwards in FIG. 1, indicated by the arrow in the figure), both the intake valve 200 and the exhaust valve 300 of the engine are in a closed state, air in the cylinder 35 is compressed, and when the piston 33 reaches the vicinity of the compression top dead center, fuel (e.g., diesel) is injected into the cylinder through a fuel injection nozzle 500 to be mixed with the compressed air and compress-ignited and to be combusted during the subsequent expansion (or working) stroke, thereby producing gas expansion to drive the piston 33 from the compression top dead center to an expansion bottom dead center. Finally, in the exhaust stroke of the engine 30, the piston 33 moves from the expansion bottom dead center to an exhaust top dead center, and the exhaust valve 300 of the engine opens to exhaust the combusted gases from the cylinder 35 to an exhaust manifold 22. After the exhaust stroke is completed, the engine 30 returns to the intake stroke, a new cycle is started and the operation repeats.

The combined engine braking system shown in FIG. 1 is used for the engine 30 with a turbocharger 210 in which the intake valve 200 of the cylinder 35 is connected with an outlet of a compressor 218 of the turbocharger 210 through a main intake pipe 14, the cylinder 35 is further provided with the exhaust valve 300 connected with the exhaust manifold 22, and the engine is provided with an engine brake 100 for opening the exhaust valve of the engine in the vicinity of the compression top dead center of the engine to release gases compressed in the cylinder 35 into the exhaust manifold 22 during the engine compression stroke; the combined engine braking system includes an air supercharging mechanism (also called an air injection mechanism) 40 including an air compressor 41 or an air reservoir, a control valve 45, and an air outlet pipe 47; the end face of the air outlet pipe 47 may be provided with a nozzle 48 (or joint) for injecting air into the turbocharger 210 to control the operating speed of the turbocharger. This example does not require any metal valve body or physical obstruction in an exhaust tailpipe 240 of the engine or in the turbocharger 210, instead, this example controls the operating speed of the turbocharger 210 through the air supercharging mechanism 40 and regulates the intake pressure and exhaust pressure of the engine to improve the braking performance of the engine. It is apparent that the air supercharging mechanism 40 of the present invention not only has no adverse effects on but also improves the operation of the turbocharger 20 by increasing the intake air pressure and airflow and the consequent cooling effect without increasing the exhaust gas temperature and the fuel nozzle temperature.

Most existing engines are equipped with the turbocharger 210 shown in FIG. 1 to improve the power and efficiency of the engine; the turbocharger 210 in this example includes a turbine 228 and a compressor 218 connected by a shaft 222, and the exhaust manifolds 22 connected with the cylinders 35 are each connected with an exhaust flow passage (exhaust pipe) 24 leading all the way to turbine blades within the turbine 228. The gas exhausted from the cylinder 35 (air during braking) is collected from the exhaust manifold 22 into the exhaust flow passage 24 to drive the turbine 228 to rotate with the compressor 218 connected therewith through the shaft 222 to compress the air 140 entering from an engine inlet, thereby increasing the intake pressure in the main intake pipe 14. The main intake pipe 14 is divided into a desired plurality of intake manifolds 12 by intake flow distributor nodes 13, each of the intake manifolds 12 is connected with the intake valve 200 of the cylinder 35. As the temperature of the compressed air increases, the efficiency of the engine is reduced, so before entering the cylinder 35 of the engine, the compressed air is cooled down by an intercooler 120, and then distributed by the intake flow distributor nodes 13 and enters the cylinder 35 through the intake manifold 12 and the intake valve 200. Moreover, existing engines are generally provided with four valves, two intake valves, and two exhaust valves for each cylinder, the single intake valve 200 and the single exhaust valve 300 shown in FIG. 1 are intended for illustrative purposes only. According to the invention, by controlling the operating speed of the turbocharger, the air intake pressure in the main air intake pipe 14 is regulated, and the exhaust pressure of the engine is in turn regulated; and the air supercharging mechanism is provided for improving the braking performance of the engine.

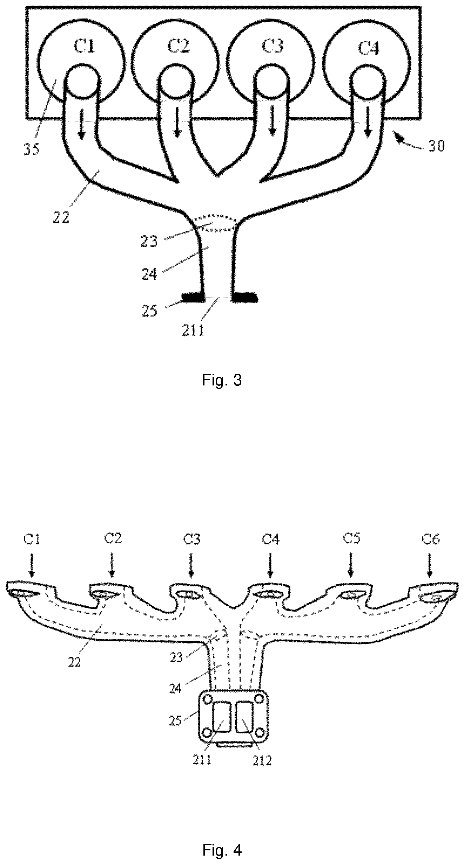

In FIG. 1, an engine brake 100 is symbolically provided above the exhaust valve 300 for opening the exhaust valve 300 of the engine in the vicinity of the compression top dead center of the engine 30, the gas compressed in the cylinder 35 during an engine compression stroke is released into the exhaust manifold 22 and forms an exhaust gas flow into the exhaust flow passage 24 at a juncture 23 of the exhaust manifold. The engine brake 100 in this example may be a compression-release type, a bleeder type or other types of the engine brake. The exhaust flow passage 24 in this example leads to the turbine blades through a joint 25 (which may also be the inlet 211 of the turbine 228, see FIGS. 3 and 4). The exhaust gas flow exits the exhaust tailpipe 240 after driving the turbine blades. The outer diameter of the turbine blades of the turbine 228 in this example varies in the axial direction.

FIG. 1 shows an example having the air supercharging mechanism 40, the air supercharging mechanism 40 is used to inject air into the exhaust flow passage 24 downstream of the exhaust manifold 22 (the exhaust flow passage 24 extends into a space between the turbine blades within the turbine 228 in this example), and the injected air is used to control the exhaust gas flow into the turbine 228 and the operating speed of the turbocharger 210 to regulate the exhaust pressure, the intake pressure and the intake gas flow, thereby optimizing the engine braking. The air supercharging mechanism 40 includes the air compressor 41, an air guide pipe 43 and the air outlet pipe 47, wherein the control valve 45 is disposed between the air guide pipe 43 and the air outlet pipe 47, and a nozzle 48 or a joint (a nozzle can be disposed in the joint) can be disposed at the end of the air outlet pipe. The air compressor 41 compresses air 400, and the compressed air is guided to the nozzle 48 by the air guide pipe 43, the control valve 45 and the air outlet pipe 47. Of course, the compressed air may also come from an air reservoir (which is typically equipped on the vehicle). This example can control injection time and flow rate of the air through the control valve 45 according to the available amount of the compressed air on the vehicle, the demand of the braking power, the limitation of the braking load, etc. In addition, the air supercharging mechanism 40 may be provided with a one-way valve (check valve) on the air outlet pipe to allow the compressed air to be ejected from the air supercharging mechanism but to prevent the exhaust gas flow within the engine from entering the air supercharging mechanism.

The compressed air on the vehicle is mainly used for controlling or operating the foundation braking, whether the compressed air on the vehicle can be used for performing air supercharging for engine braking or not should be determined according to the operating condition of the vehicle. Nevertheless, the compressed air on the vehicle can be effectively utilized by designing a control program.

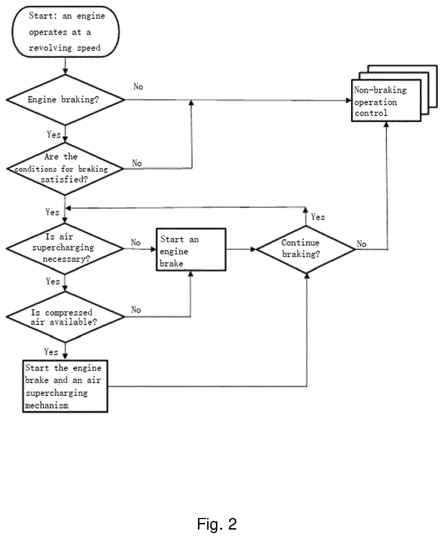

FIG. 2 is a schematic diagram of a control process of a combined engine braking method of the present invention. The combined engine braking method can be realized by adopting the combined engine braking system described above; the method may include the steps of:
a) determining whether engine braking is necessary when the engine runs at a certain speed;
b) determining whether conditions required for engine braking are satisfied if engine braking is necessary;
c) determining whether the air injection mechanism needs to be started if the conditions required for engine braking are satisfied;
d) directly starting the engine brake if the air injection mechanism does not need to be started;
e) determining whether compressed air is available if the air injection mechanism needs to be started; performing combined engine braking if the compressed air is available: starting the engine brake and the air injection mechanism.

In the engine braking process of the present invention, whether the air supercharging mechanism needs to be started or not is determined before implementing combined engine braking, which is to start the engine brake and the air supercharging mechanism, thereby controlling the operating speed of the turbocharger through the air supercharging mechanism and regulating the intake pressure and the exhaust pressure of the engine to improve the braking performance of the engine.

The details of the control process are as follows: as shown in FIG. 2, it's initially assumed that the engine is operating at a certain speed, the engine control unit (ECU) performs non-braking (e.g., ignition) operation control, namely, steps a) to b) described above, if engine braking is not necessary or engine braking conditions are not met (e.g., the engine speed is not high enough, the clutch is not in gear, etc.). On the contrary, if engine braking is necessary and engine braking conditions are satisfied, a determination should be made as to whether air supercharging is necessary, namely, step c) described above. If air supercharging is not necessary (e.g., the braking speed is too high, the braking load is too much, etc.), only the engine brake is started, namely, step d) described above. But if air supercharging (e.g., braking at medium and low speeds) is necessary, combined engine braking is performed to start both the engine brake and the air supercharging mechanism, the exhaust valve is opened using the engine brake, and the operating speed of the turbocharger is improved using the air supercharging mechanism, namely, step e) described above. A determination is made as to whether braking is to be continued in the braking process (i.e., after starting the engine brake or performing combined engine braking); if it's determined to continue, steps c) to e) are repeated, and if not, a non-braking operation control process, such as ignition, is performed.

The engine 30 illustrated in FIG. 3 is a straight-four-cylinder engine, the four cylinders 35 are noted as C1, C2, C3 and C4, respectively. The gases released by the cylinders 35 to the exhaust manifold 22 upon engine braking forms the exhaust gas flow into the exhaust flow passage 24 at the juncture 23 and into the inlet 211 of the turbine at the joint 25 where the exhaust flow passage 24 is connected with the turbine 228. Therefore, there is only one exhaust flow passage 24 and one inlet 211 of the turbine. The nozzle 48 of the air supercharging mechanism is disposed at the joint 25 of the exhaust flow passage 24 and the inlet of the turbine, and the compressed air is injected into the exhaust flow passage 24 in the vicinity of the inlet 211 of the turbine.

When the air supercharging mechanism is started, air is injected into the exhaust flow passage using the air supercharging mechanism to alter the airflow to the turbine blades of the turbine in the turbocharger, and to change the rotating speed of the turbine blades. The direction in which the air supercharging mechanism injects the compressed air into the exhaust flow passage can be perpendicular to the flow direction of the exhaust gas flow in the exhaust flow passage 24; or can form an acute angle with the direction of the exhaust gas flow in the exhaust flow passage 24 (i.e., injected downwards into the turbine 228 as shown in FIG. 3), in which case an increase of the gas flow to the turbine blades of the turbine in the turbocharger is facilitated so as to increase the rotating speed of the turbine blades; or can form an obtuse angle with the direction of the exhaust gas flow in the exhaust flow passage 24 (i.e., injected upwards into the exhaust flow passage 24 as shown in FIG. 3).

The engine 30 illustrated in FIG. 4 is a straight-six-cylinder engine, the six cylinders 35 are noted as C1, C2, C3, C4, C5 and C6, respectively. Each group of three cylinders (e.g., the first three cylinders C1, C2, and C3 or the second three cylinders C4, C5, and C6) shares one of the exhaust flow passages 24. The gases released by the cylinders 35 to the exhaust manifold 22 upon engine braking forms the exhaust gas flow into the exhaust flow passage 24 at the juncture 23 and into the inlet 211 or 212 of the turbine at the joint 25 where the exhaust flow passage 24 is connected with the turbine 228. Therefore, there are two exhaust flow passages 24 and two inlets 211 and 212 of the turbine. The nozzle of the air supercharging mechanism is disposed at the joint 25 of the outlet of the exhaust flow passage 24 and the inlet of the turbine, selectively injecting the compressed air into one of the two exhaust flow passages 24 in the vicinity of the inlet of the turbine, and also allowably, injecting the air into both the exhaust flow passages 24 simultaneously.

When the air supercharging mechanism is started, air is injected into the exhaust flow passage using the air supercharging mechanism to alter the airflow to the turbine blades of the turbine in the turbocharger, and to change the rotating speed of the turbine blades. The direction in which the air supercharging mechanism injects the compressed air into the exhaust flow passage can be perpendicular to the flow direction of the exhaust gas flow in the exhaust flow passage 24, or can form an acute angle with the direction of the exhaust gas flow in the exhaust flow passage 24 (i.e., injected downwards into the turbine 228 as shown in FIG. 4), in which case an increase of the gas flow to the turbine blades of the turbine in the turbocharger is facilitated so as to increase the rotating speed of the turbine blades, or can form an obtuse angle with the direction of the exhaust gas flow in the exhaust flow passage 24 (i.e., injected upwards into the exhaust flow passage 24 as shown in FIG. 4).

Moreover, there is another way for the air supercharging mechanism to inject the compressed air into the exhaust flow passage, which is to provide an air inlet hole in the turbine housing of the turbocharger 210, and the end of the air outlet pipe communicates with the air inlet hole. When the air supercharging mechanism is started, air is injected onto the turbine blades in the turbine through the air inlet hole by the air supercharging mechanism to increase the rotating speed of the turbine. According to the requirement of engine braking, a vehicle-mounted air compressor or air reservoir is utilized to inject the compressed air directly onto the turbine blades from the air inlet hole in the turbine housing through the control valve and the air guide pipe, and to increase the rotating speeds of the turbine blades and the compressor and the air intake amount as well as the air intake pressure, thereby increasing the braking power generated by the engine brake.

In addition, there is yet another way for the air supercharging mechanism to inject the compressed air into the exhaust flow passage, which is to provide an air injection hole in the compressor housing of the turbocharger, and the end of the air outlet pipe communicates with the air injection hole; and air is injected onto the compression impeller in the compressor through the air injection hole using the air supercharging mechanism. According to the braking requirement of the engine, in this example, when the air supercharging mechanism is started, the vehicle-mounted air compressor or air reservoir is utilized to inject the compressed air directly to the compression impeller from the air injection hole in the compressor housing through the control valve and the air outlet pipe, and to increase the rotating speed of the compression impeller and the air intake amount as well as the air intake pressure, thereby increasing the braking power generated by the engine brake.

### EXAMPLE 2 (CN 201810353337.9 AND CN 201820559905.6)

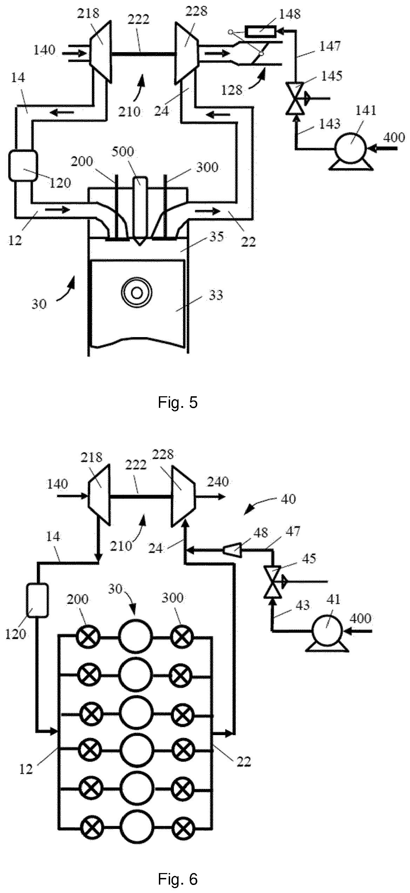

FIG. 5 is a schematic diagram of a conventional four-stroke engine 30 with an exhaust brake system 128. A typical engine has a plurality of cylinders, such as a straight-six-cylinder diesel engine on a commercial vehicle (see FIG. 6). However, for simplicity, FIG. 5 shows only one cylinder 35 in the engine 30. The piston 33 of the engine 30 makes vertical reciprocating periodic movement in the cylinder 35. Each cycle of operation of the four-stroke engine 30 includes the intake stroke, the compression stroke, the expansion (or working) stroke, and the exhaust stroke. In the intake stroke, the engine piston 33 in FIG. 5 moves from the top dead center to the intake bottom dead center in the cylinder 35, the intake valve 200 of the engine opens to introduce air into the cylinder 35 of the engine. Next, compression stroke follows, the piston 33 moves from the intake bottom dead center to the compression top dead center, the intake valve 200 and the exhaust valve 300 of the engine are in a closed state, air in the cylinder 35 is compressed, when the piston 33 reaches the vicinity of the compression top dead center, fuel (such as diesel fuel) is injected into the cylinder to be mixed with the compressed air and compress-ignited and to continue combustion during the subsequent expansion (or working) stroke, thereby generating gas expansion to drive the piston 33 from the compression top dead center to the expansion bottom dead center. Finally, in the exhaust stroke of the engine, the piston 33 moves from the expansion bottom dead center to the exhaust top dead center, and the exhaust valve 300 of the engine opens to exhaust the combusted gases from the cylinder 35 to the exhaust manifold 22. After the exhaust stroke is completed, the engine 30 returns to the intake stroke, a new cycle is started and the operation repeats. Of course, there may be auxiliary valve movements in addition to conventional intake and exhaust movements, for example, internal exhaust gas recirculation (iEGR) requires reopening of the exhaust valve during the intake stroke.

Most existing engines are equipped with the turbocharger 210 shown in FIG. 5 to improve the power and efficiency of the engine. The exhaust gas from the engine cylinder 35 enters the exhaust flow passage (exhaust pipe) 24 from the exhaust manifold 22 to drive the turbine 228 to rotate with the compressor 218 connected therewith through the shaft 222 to compress the air 140 entering from an engine inlet, thereby increasing the intake pressure in the intake pipe 14. As the temperature of the compressed air increases, the efficiency of the engine is reduced, so before entering the cylinder 35 of the engine, the compressed air is cooled down by an intercooler 120 and enters the cylinder 35 through the intake manifold 12 and the intake valve 200. Further, the conventional engine is generally provided with four valves, two intake valves, and two exhaust valves for each cylinder, the single intake valve 200 and the single exhaust valve 300 shown in FIG. 5 are intended for illustrative purposes only.

The main difference between the engine braking operation and the ignition operation lies in no fuel injection or combustion during braking, and that the power-generating engine is temporarily converted into an energy-absorbing air compressor. The simplest engine braking is out-of-cylinder braking, i.e., employing an engine exhaust pressure control mechanism, such as an exhaust brake system 128, to block the exhaust pipe of the engine and cut off the exhaust gas flow, so that the exhaust backpressure increases and the resistance to the upward movement of the piston 33 during the exhaust stroke of the engine increases, resulting in engine braking. The exhaust brake is caused to close by the compressed air. The air 400 is compressed and pressurized by the air compressor 141 and then supplied to the cylinder 148 to drive the exhaust brake through the air guide pipes 143 and 147 and the control valve 145. The out-of-cylinder braking (such as exhaust braking) has the advantages of being simple and easy to implement but has the disadvantages of poor braking performance, high exhaust temperature and a bulky exhaust brake body.

A more complex and efficient engine braking is in-cylinder braking. In addition to the conventional operation of opening the intake and exhaust valves during the intake and exhaust strokes in the process of braking, the engine brake reopens the exhaust valve when the compression stroke of the engine piston is ending, allowing the compressed gas, which is air during braking, to be released; the energy absorbed by the compressed gas during the compression stroke of the engine cannot return to the piston of the engine during the subsequent expansion (working) stroke, instead, the energy is released through the exhaust and heat dissipation system of the engine. The end result is effective engine braking, which slows down the vehicle. The in-cylinder braking (such as compression-release braking) has the advantages of good braking performance but has a complex structure and implementation, featuring a high braking load and much noise.

Engine braking with the best braking performance (especially at medium and low speeds) is the so-called combination braking, i.e., employing both the in-cylinder and the out-of-cylinder braking. The performance of the combination braking is improved, the braking load is reduced, and the noise is eliminated. However, the exhaust temperature is further increased, resulting in overheating of certain components of the engine, such as the fuel injector. An effective solution to the above-mentioned overheating problem is to use a variable exhaust backpressure control device, but the additional problems resulting therefrom are higher cost, increased volume, complicated control, etc.

FIG. 6 is a schematic view showing an overall structure of the turbocharging control device and the engine system (six cylinders) of the present invention. Shown is a straight-six-cylinder engine 100 that does not require the exhaust brake system of FIG. 5, with the addition of a fluid (air) injection mechanism 40, including the nozzle 48. The nozzle 48 injects fluid (air) into the exhaust flow passage (exhaust pipe) 24 downstream of the engine exhaust manifold 22, the injected fluid (air) forms a barrier ("air gate") within the exhaust flow passage 24 that blocks or slows down the engine exhaust gas flow 240 to increase the engine exhaust pressure upstream of the barrier, including within the exhaust manifold 22. The injected fluid is generated by a power source 41, which may be a pump or a compressor for generating a fluid for injection with a predetermined pressure, depending on the fluid 400 (which may be a liquid or a gas). The fluid with the predetermined pressure is directed to the nozzle 48 by the guide pipes 43 and 47, and the injection time and flow rate are controlled by the control valve 45. The injected fluid includes water and air.

### First injection mode:

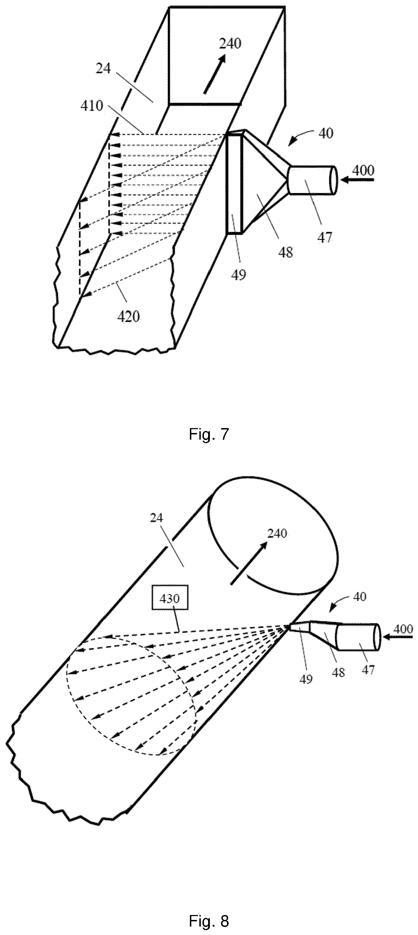

The first injection mode of the air injection mechanism of the turbocharging control device of this example can be further explained with reference to FIG. 7. The nozzle 48 of the air injection mechanism 40 illustrated in FIG. 7 has a flat injection head 49 on one side (the right side in FIG. 7) of the periphery of the exhaust flow passage 24. The flat injection head 49 has one or more circular holes or slots, the number and size of the circular hole or slot is determined by flow rate, velocity and distance of the injected fluid, and the circular holes or slots on the injection head may be arranged in a single row (layer) or multiple rows (layers). The injected fluid (air) is in the shape of a plane 410 or 420, forming a fluid curtain ("air gate"), covering the entire cross-section of the exhaust flow passage 24 (and may also cover a portion of the cross-section of the exhaust flow passage 24), and altering the engine exhaust flow 240. The flow direction 410 of the injected fluid is rendered in one injection manner to be substantially perpendicular (transverse) to the flow direction 240 of the exhaust gas flow in the exhaust flow passage 24, and in another injection manner to be at an obtuse angle (in the case of reverse flow) with the flow direction 240 of the exhaust gas flow in the exhaust flow passage 24.

### Second injection mode:

The second injection mode of the air injection mechanism of the turbocharging control device of this example can be further explained with reference to FIG. 8. The nozzle 48 of the air injection mechanism 40 illustrated in FIG. 8 has a frustoconical injection head 49 positioned on one side (the right side in FIG. 8) of the periphery of the exhaust flow passage 24. The cylindrical injection head 49 has one or more circular holes, the number and size of which is determined by flow rate, velocity and distance of the injected fluid. The injected fluid is in the shape of a conical surface 430, covering the entire cross-section of the exhaust flow passage 24 (and may also cover a portion of the cross-section of the exhaust flow passage 24) and altering the engine exhaust gas flow 240. The flow direction 430 of the injected fluid is at an obtuse angle (in the case of reverse flow) to the flow direction 240 of the exhaust gas flow in the exhaust flow passage 24.

### Third injection mode:

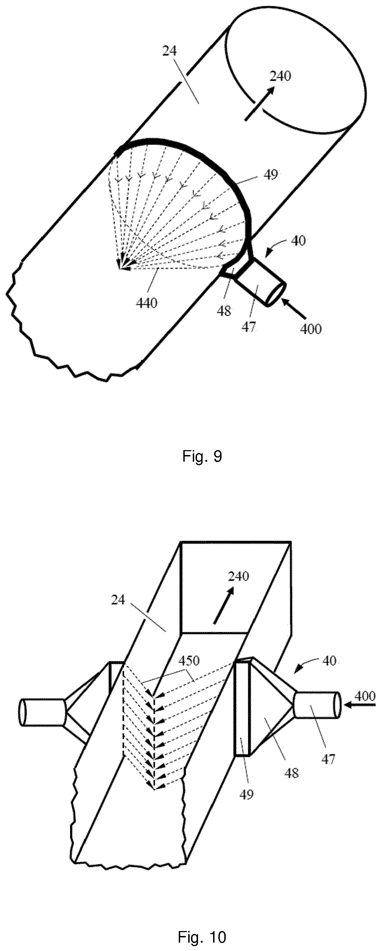

The third injection mode of the air injection mechanism of the turbocharging control device of this example can be further explained with reference to FIG. 9. The nozzle 48 of the air injection mechanism 40 illustrated in FIG. 9 has an annular injection head 49 positioned around the entire (360 deg.) periphery of the exhaust flow passage 24. The annular injection head 49 has one or more circular holes or slots, the number and size of the circular holes or slots is determined by flow rate, velocity and distance of the injected fluid, and the circular holes or slots on the injection head may be arranged to be single, in single layer or in multiple layers. The injected fluid is in the shape of a conical surface 440, altering the engine exhaust gas flow 240. The flow direction 440 of the injected fluid is at an obtuse angle (in the case of reverse flow) with the flow direction 240 of the exhaust gas flow in the exhaust flow passage 24.

### Fourth injection mode:

The fourth injection mode of the air injection mechanism of the turbocharging control device of this example can be further explained with reference to FIG. 10. The flat injection heads 49 of the nozzle 48 of the air injection mechanism 40 illustrated in FIG. 10 are positioned on both side of the exhaust flow passage 24 and inject air 400 into the exhaust flow passage 24 to form a rooftop-like barrier 450 that alters the exhaust gas flow 240 in the exhaust flow passage 24.

### Fifth injection mode:

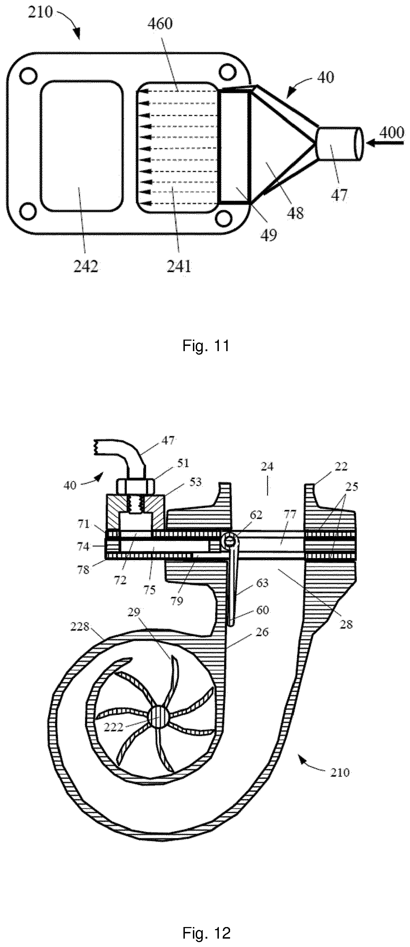

The fifth injection mode of the air injection mechanism of the turbocharging control device of this example can be further explained with reference to FIG. 11. The injection head 49 of the nozzle 48 of the air injection mechanism 40 illustrated in FIG. 11 is positioned on one side (the right side in FIG. 11) of an exhaust inlet 241 of the turbocharger 20. The turbocharger 210 herein has two exhaust inlets 241 and 242, communicating with the two outlets of the engine exhaust manifold, and forming two separate exhaust flow passages. The nozzle 48 of the air injection mechanism 40 injects the fluid 400 into one of the two separate exhaust flow passages and forms a barrier 460 that alters the exhaust gas flow into the single exhaust flow passage and the turbocharger exhaust inlet 241 in communication therewith.

Compared with the prior art, the effect of the example is positive and distinct. According to the present invention, no metal valve body or physical obstruction is required in the exhaust flow passage of the engine; instead, the fluid (air) injected by the fluid (air) injection mechanism forms a fluid (air) barrier in the exhaust flow passage, obstructs or slows down the exhaust gas flow in the exhaust flow passage, increases the exhaust pressure of the engine upstream of the barrier, improves the exhaust gas recirculation of the engine, reduces the emission of the engine, and increases the braking power of the engine.

### EXAMPLE 3 (CN 201810935370.2)

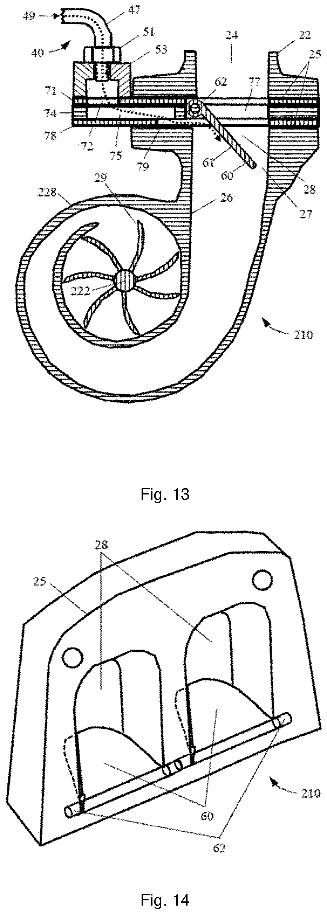

As apparent from FIGS. 11 to 14, unlike a conventional exhaust brake driven by a piston-cylinder mechanism, a guide gate disposed in an exhaust flow passage is driven by the air injected by the air injection mechanism. A guide gate 60 is rotatably disposed within the exhaust flow passage 24 (note that an inlet passage 28 of the turbine 228 is part of the exhaust flow passage). When the guide gate 60 is in the initial position without rotation (the rotation angle is zero), an inner side surface 61 of the guide gate 60 faces an inner wall 26 of the exhaust flow passage. The rotation of the guide gate 60 illustrated herein is obtained by means of a hinge 62. The hinge 62 of the guide gate is disposed within a hinge slot 76 of an air supply plate 74 (see FIG. 14). The two guide gates 60 in the two inlet passages 28 of the turbine can rotate independently of each other or together simultaneously (FIG. 13).

The system for increasing the exhaust pressure of the engine according to the present invention further includes the air injection mechanism 40 including the air compressor 41, the air guide pipe 43 and the air outlet pipe 47, wherein the control valve 45 is provided between the air guide pipe 43 and the air outlet pipe 47, the nozzle 48 or a joint 53 may be provided at the end of the air outlet pipe (the nozzle may also be provided in the joint), and the air outlet pipe 47 is secured onto the joint 53 by a nut 51. The air compressor 41 compresses the air 400, and the compressed air is guided to the nozzle 48 by the air guide pipe 43, the control valve 45 and the air outlet pipe 47. Of course, the compressed air may also come from an air reservoir (which is typically equipped on the vehicle). This example can control the injection time and the flow rate of the air through the control valve 45 according to the available amount of the compressed air on the vehicle, the demand of the braking power, the limitation of the braking load, etc. In addition, the air supercharging mechanism 40 may be provided with a one-way valve mechanism to allow the compressed air to be ejected from the air supercharging mechanism, but to prevent the exhaust gas flow within the engine from entering the air supercharging mechanism.

The operation of the present invention is as follows: when it's required that the exhaust pressure of the engine be increased, the control valve 45 is opened, and the air outlet pipe 47 injects compressed air from the outside of the exhaust flow passage to the inner side surface 61 of the guide gate 60 in the exhaust flow passage through air supply joint 53, air supply hole/slot 72 in a first gasket 71, air supply hole/slot 75 in the air supply plate 74 and air supply hole/slot 79 in a second gasket 78 (see FIG. 12); the guide gate 60 is driven to rotate, the angle between the guide gate 60 and the inner wall 26 of the exhaust flow passage is increased, the flow direction of the exhaust gas flow of the engine in the exhaust flow passage is altered, the flow area 27 of the exhaust flow passage 24 is reduced, and the exhaust pressure in the exhaust flow passage 24 upstream of the guide gate 60 is increased. Moreover, as the rotating speed of the turbocharger 210 is increased, the intake air pressure and the intake airflow of the engine are also increased, thereby increasing the engine braking power more effectively.

As the angle between the guide gate 60 and the inner wall 26 of the exhaust flow passage increases, the outer side surface 63 of the guide gate bears the impact of the exhaust gas flow. The force of the compressed air on the inner side 61 balances the force of the exhaust flow on the outer side 63, determining the rotation angle of the guide gate 60 and the flow area 27 of the exhaust flow passage 24. According to the invention, the injection time and the flow rate of the compressed air can be regulated by the control valve 45 according to different engine working conditions (such as the engine speed), the rotation angle of the guide gate 60 and the flow area 27 of the exhaust flow passage 24 are controlled, so that the rotating speed of the turbine and the intake and exhaust pressures of the engine are regulated, and the performance of the engine braking is improved. It is apparent that the present invention not only has no adverse effects on but also improves the operation of the turbocharger 210 by increasing the intake air pressure and airflow and the consequent cooling effect without increasing the exhaust gas temperature and the fuel nozzle temperature.

Furthermore, since the pressures imposed on the inner side surface 61 and the outer side surface 63 of the guide gate 60 tend to be balanced, the thickness of the guide gate 60 may be small, such as 0.5-1.5 mm, preferably 1.0 mm. As such, the guide gate not only weighs little but also occupies little space and can be easily installed upstream of the turbine.

As described above, the invention of this example has the following advantages: a piston-cylinder mechanism is not required, instead, the guide gate is driven by the air injection mechanism to alter the direction and the flow velocity of exhaust gas flow, to increase the rotating speed of the turbocharger, and to increase the exhaust pressure of the engine.

The foregoing description includes many specific embodiments, which should not be construed as limiting the scope of the invention, but rather as representing some specific examples of the invention from which many other variations are possible. Accordingly, it is intended that the appended claims cover all such equivalent modifications and variations made by those of ordinary skills in the art without departing the spirit of the invention. For example, the device and method of the present invention may be used for different engines, including overhead cam engines and pushrod engines; may be used for a single-valve engine or a multi-valve engine with two or more valves; and may be used not only for the braking operation of the engine but also for ignition operation of the engine, such as reduction of turbo lag, an increase of exhaust gas recirculation, etc.

Moreover, the composition, shape, installation and regulation of the air injection mechanism herein may vary. For example, the nozzle at the end of the air outlet pipe may be flat, frustoconical, circular, annular, etc.

In addition, the nozzle or the joint at the end of the air outlet pipe may be disposed in different positions and different ways.

Moreover, the manner, time, flow, and direction of injection of the air injection mechanism may be regulated according to engine operating requirements, such as braking power requirements, braking load limitations, and sources of the compressed air.

In addition, the cross-section of the exhaust flow passage can be other shapes besides square or circular shapes.

Moreover, the air supercharging (injection) mechanism may inject air in one or more directions.

In addition, the inner side surface of the guide gate may be in various shapes, including a folded surface (a combination of two or more flat surfaces), a concave surface, a combined surface, or other curved surfaces besides a flat surface. The position and manner of installation of the guide gate may also vary.

Moreover, the air injection mechanism of the present invention may be used as a fluid injection mechanism, and the injected fluid may be different from those described herein, for example, the injected fluid may be urea, nitrogen, argon and the like besides water and air.

## Claims

1. A combined engine braking method for an engine with a turbocharger, **characterized in that** the engine comprises an engine brake which opens an exhaust valve on an engine cylinder and releases gas compressed in the engine cylinder during a compression stroke of the engine into an exhaust manifold; an air injection mechanism is provided for altering an exhaust gas flow of the engine, controlling the operation of the turbocharger, and regulating an intake pressure and an exhaust pressure of the engine; the combined engine braking method comprises the steps of:
a) determining whether engine braking is necessary when the engine runs at a certain speed;
b) determining whether conditions required for engine braking are satisfied if engine braking is necessary;
c) determining whether the air injection mechanism needs to be started if the conditions required for engine braking are satisfied;
d) directly starting the engine brakeif the air injection mechanism does not need to be started; and
e) performing combined engine braking if the air injection mechanism needs to be started, starting the engine brake and the air injection mechanism.

2. The combined engine braking method according to claim 1, **characterized in that** an exhaust flow passage is provided between the exhaust manifold of the engine and turbine blades of a turbine of the turbocharger, and the air injection mechanism is started according to step e) to inject air into the exhaust flow passage.

3. The combined engine braking method according to claim 2, **characterized in that** the air is injected in a flat shape by the air injection mechanism to form an air gate which covers part or all of the exhaust flow passage.

4. The combined engine braking method according to claim 2, **characterized in that** the air is injected in a conical shape by the air injection mechanism to form an air barrier that covers part or all of the exhaust flow passage.

5. The combined engine braking method according to claim 1, **characterized in that** the turbocharger comprises two exhaust inlets, the exhaust manifold comprising two outlets, each of the exhaust inlets of the turbocharger communicates with one of the outlets of the exhaust manifolds to form two separate exhaust flow passages, the air injection mechanism is started according to step e) to inject air into only one of the exhaust flow passages.

6. The combined engine braking method according to claim 1, **characterized in that** an air inlet is provided in a turbine housing of the turbocharger, and the air injection mechanism is started according to step e) to inject air through the air inlet to turbine blades in the turbine.

7. The combined engine braking method according to claim 1, **characterized in that** an air injection hole is provided in a compressor housing of the turbocharger, the air injection mechanism is started according to step e) to inject air to a compression impeller in the compressor through the air injection hole.

8. The combined engine braking method according to claim 1, **characterized in that** the exhaust flow passage is provided between the exhaust manifold of the engine and turbine blades of the turbocharger, a guide gate is arranged in the exhaust flow passage, the air injection mechanism is started according to step e) to inject compressed air to the guide gate and drive the guide gate to move in the exhaust flow passage.

9. The combined engine braking method according to claim 8, **characterized in that** the guide gate is positioned in an inlet passage of the turbine of the turbocharger, a hinge of the guide gate is provided at a joint of the outlet of the exhaust manifold with an inlet of the turbine of the turbocharger, the guide gate is rotatable about the hinge in the inlet passage of the turbine, an inner side of the guide gate faces an inner wall of the exhaust flow passage when the guide gate is in an initial position without rotation, the compressed air is injected on an inner side surface of the guide gate.

10. The combined engine braking method according to claim 8, **characterized in that** a position where the air injection mechanism injects the compressed air to the inner side surface of the guide gate in the exhaust flow passage is at the joint of the outlet of the exhaust manifold with the inlet of the turbine of the turbocharger.

11. The combined engine braking method according to claim 8, **characterized in that** the turbine of the turbocharger has two inlet passages, and one guide gate is provided in each of the inlet passages of the turbine.

12. The combined engine braking method according to claim 11, **characterized in that** the two guide gates in the two inlet passages of the turbine are separately and independently rotatable or connected for simultaneous rotation.

13. The combined engine braking method according to claim 1, **characterized in that** the air injection mechanism comprises a power source and a control valve, the power source comprises an air compressor or an air reservoir, the air compressor or the air reservoir generates compressed air, and the control valve controls the injection time and the flow rate of the compressed air.

14. A turbocharging control device provided on an engine with a turbocharger, **characterized in that** the turbocharging control device comprises an air injection mechanism, the air injection mechanism comprises a power source, a control valve, an air outlet pipe or a nozzle, wherein the power source comprises an air compressor or an air reservoir, the control valve controls the injection time and flow rate of air, and the air injection mechanism injects air into an exhaust flow passage of an engine or turbine blades or a compressor impeller of the turbocharger through the air outlet pipe or the nozzle to control operation of the turbocharger.

15. The turbocharging control device according to claim 14, **characterized in that** the nozzle comprises an injection head having a flat shape, the injection head having the flat shape comprises more than one circular holes or slots arranged on one or more levels.

16. The turbocharging control device according to claim 15, **characterized in that** the number and size of the circular hole or slot are determined by flow rate, velocity and distance of an injected fluid.

17. The turbocharging control device according to claim 14, **characterized by** further comprising a guide gate rotatably provided in the exhaust flow passage, when the guide gate is in an initial position without rotation, an inner side surface of the guide gate faces an inner wall of the exhaust flow passage, and the air injection mechanism injects air from the outside of the exhaust flow passage to the inner side surface of the guide gate in the exhaust flow passage to drive the guide gate to rotate and alter the exhaust gas flow in the exhaust flow passage.

18. The turbocharging control device according to claim 17, **characterized in that** the inner side surface of the guide gate may be of different shapes, including flat, folded, concave, combined shapes or other curved shapes.

19. The turbocharging control device according to claim 17, **characterized in that** the exhaust flow passage comprises an inlet passage of a turbine of the turbocharger, the guide gate is positioned in the inlet passage of the turbine, a hinge of the guide gate is provided at a joint of an outlet of an exhaust manifold with an inlet of the turbine of the turbocharger, the guide gate rotates about the hinge in the inlet passage of the turbine.

20. The turbocharging control device according to claim 17, **characterized in that** the air injection mechanism comprises an air supply plate provided between the outlet of the exhaust manifold and the inlet passage of the turbine of the turbocharger, the air supply plate has a hinge slot formed therein, the hinge of the guide gate is disposed within the hinge slot.

21. The turbocharging control device according to claim 14, **characterized in that** the air outlet pipe or nozzle of the air injection mechanism is positioned at the joint of the outlet of the exhaust manifold and the inlet of the turbine of the turbocharger.

22. The turbocharging control device according to claim 14, **characterized in that** the turbine of the turbocharger has two inlet passages, and one guide gate is provided in each of the inlet passages of the turbine.

23. The turbocharging control device according to claim 22, **characterized in that** the two guide gates in the two inlet passages of the turbine are separately and independently rotatable or connected for simultaneous rotation.
